# EUROPEAN PATENT APPLICATION

(11) **EP 0 714 018 A2**
(43) Date of publication of application: **29.05.1996**
(21) Application number: 95103733.2
(22) Date of filing: 15.03.1995
(51) Int. Cl.: G01M 3/16, G08B 17/117, D06F 39/08, F23N 5/24

(54) **Liquid or gas leak detection and shut-off system**

(30) Priority: 25.11.1994 US 348935
(71) Applicant: Diduck, Victor John, Kamloops, British Columbia V2B 2T5 (CA)
(72) Inventor: Diduck, Victor John, Kamloops, British Columbia V2B 2T5 (CA)
(74) Representative: Bosotti, Luciano

(57) **Abstract**

This invention relates to a novel system for detecting liquid and/or gas leaks and automatically shutting off the source of the liquid and/or gas leak. More particularly, this invention pertains to a novel system for electronically detecting (12,16,20) undesirable liquid and/or gas leaks, electronically transmitting (10,14,18) an alarm signalling such undesirable liquid and/or gas leak, electronically receiving (22) the alarm, and electronically activating (24,26) a mechanism which shuts off a liquid and/or gas valve thereby stopping the liquid or gas leak. A liquid or gas leak detection and control apparatus comprising: (a) a liquid and/or gas detector (10,16,20) for detecting liquid and/or gas; (b) a transmitter (10,14,18) associated with the liquid or gas detector; said transmitter, when activated by the liquid or gas detector sensing liquid and/or gas, transmitting audio, radio or electrical signals; (c) a receiver (22) and control for receiving and acting on audio, radio or electronic signals transmitted by the transmitter; (d) a mechanism (24,26) associated with the receiver and control, the mechanism when commanded by the receiver and control being activated to shut off a valve which controls a source of the liquid and/or gas; and (e) a power supply for electrically powering the detector, transmitter, receiver and mechanism.

## Description

### Field of the Invention

This invention relates to a novel system for detecting liquid and/or gas leaks and automatically shutting off the source of the liquid or gas leak. More particularly, this invention pertains to a novel system for electronically detecting undesirable liquid and/or gas leaks, electronically transmitting an alarm signalling such undesirable liquid and/or gas leak, electronically receiving the alarm, and electronically activating a mechanism which shuts off a liquid or gas valve thereby stopping the liquid and/or gas leak.

### Background of the Invention

Most residential buildings, hotels, office buildings, and the like, in the industrialized areas of the world, are serviced by water and/or natural gas, oil or propane. These services comprise pipes, valves, and other mechanized devices and require periodic maintenance. Not infrequently, there is a malfunction and undesirable water or gas leaks into the building, thereby causing costly unwanted damage and hazard. Insurance companies insuring such buildings must pay out compensation for such unwanted water or gas damage.

There is a strong need for an automatic system which can automatically detect undesirable water or gas leakage, and automatically shut off the source of such unwanted liquid or gas leakage, until the source of the leakage can be repaired. Insurance rates can be reduced if the risk of potential damage can be minimized. Building owners would also be more comfortable with the reduced risk of accidental liquid or gas damage, and in the case of gases, alerted as to their safety.

The following patents disclose apparatus or systems which may be pertinent to the subject matter of this application.

| U.S. Patent No. | Owner |
|---|---|
| 3,757,317 | U.S. Dynasty Corp. |
| 4,024,887 | Vought Corp. |
| 4,134,022 | Honeywell U.S.A. |
| 4,248,087 | Haliburton Company |
| 4,437,497 | Enander |
| 4,715,398 | Co Be La B's Inc. |
| 4,736,763 | Britton |

U.S. Patent No. 4,134,022 discloses a level sensing apparatus that has a source for supplying a signal of a predetermined frequency. A level sensor is connected to the source and has an output for signalling an output signal which has the predetermined frequency, so long as the level of the material being sensed is not at a predetermined level. The apparatus includes a frequency sensitive circuit for receiving the output signal from the level sensor and for providing an output whenever the frequency of the signal is above or below the predetermined frequency. A load which is responsive to the output from the frequency sensitive circuit is connected to the circuit.

### Summary of the Invention

The apparatus and system of the invention has the capability of shutting off the main household water line or gas line in a residential building, when unwanted water leaking from an appliance such as a washing machine, a dishwasher, a hot water tank, or another flooding source, or a gas leak from a stove or furnace, is detected. Research sources indicate that water damage resulting from leaking appliances in a residential or business building generate a higher cost of insurance claims than insurance claims caused by fire damage. The apparatus and system of the invention applies to natural or propane gas lines servicing buildings and other residential enclosures such as mobile homes can shut down the source of the gas when a gas leak is detected. The invention pertains to both liquid and gas systems used in combination.

The invention is directed to a liquid or gas leak detection and control apparatus comprising: (a) a liquid or gas detector for detecting liquid or gas; (b) a transmitter associated with the liquid or gas detector; said transmitter, when activated by the liquid or gas detector detecting liquid or gas, transmitting audio, radio or electrical signals; (c) a receiver and control for receiving and acting on audio, radio or electronic signals transmitted by the transmitter; (d) a mechanism associated with the receiver and control, the mechanism when commanded by the receiver and control being activated to shut off a valve which controls a source of the liquid or gas; and (e) a power supply for electrically powering the detector, transmitter, receiver and mechanism.

The detector of the apparatus can be an electrical water detection detector, which can generate an electrical signal to the transmitter when water is applied or contacts the detector. The transmitter can be electrically connected to the water detector and when water is detected by the water detector, can be electrically activated and transmit a high frequency audio radio signal to the receiver. The mechanism can be an electric motor and the receiver, which can receive an audio signal or radio signal from the transmitter, can electrically activate the electric motor which can be connected to and can shut off a valve which controls the source of the fluid.

The receiver can be electrically powered by low voltage electrical current, for example, 2 to 12 volts. The low voltage electrical current can be provided by a low voltage transformer which can be connected to a source of high voltage alternating electrical current, for example, 110 to 220 AC.

The receiver can be connected to the electric motor by a wire. The motor can include a mechanism which can limit the number of rotations of the motor when activated by the receiver. The transmitter can be connected by wiring to the receiver.

The detector can be an electrical gas detection detector, which can generate an electrical signal to the transmitter when a specified gas is detected, that is, contacts the detector. The gas detector can detect the presence of natural gas, carbon monoxide or propane above a predetermined threshold level, that is, it is activated when a gas above a predetermined level contacts the detector.

The mechanism can be an electric motor and the receiver, when receiving a signal from the natural gas sensor activated transmitter, can deliver an electrical signal to the motor, which can be connected to and can shut off a valve which controls the source of the detected natural gas, carbon monoxide or propane.

The detector can be a propane gas detector. The detector, in the case of a water detector, can be an electrical wire, enclosed in electrical insulation, with one or more ports in the insulation which enable water to penetrate the insulation and contact the electrical wire. The water detector apparatus can include a second electrical wire enclosed in the insulation, with one or more ports in the insulation, which enable water to penetrate the electrical insulation and contact the electrical wire.

The motor can be a rotary electrical motor which is connected to the water valve by a series of gears and shafts which translate motor rotational force to valve closing or opening rotational force. The apparatus can include a maximum motor rotation limiting switch, or a current control.

The transmitter can transmit radio signals of a specified frequency, and the receiver can receive and be activated by radio signals of the same specified frequency.

The apparatus can include at least one water detector, at least one transmitter associated with the detector, at least one receiver associated with the water detection transmitter, at least one mechanism which is an electrically activated motor connected to a water shut-off valve, at least one gas detector, at least transmitter associated with the gas detector, at least one receiver associated with the gas detector transmitter and at least one mechanism which is an electrical motor connected to a valve controlling a gas source.

The apparatus can include a plurality of water detector deployed throughout a building, and a plurality of connecting transmitters deployed throughout the building, the transmitters communicating with respective receivers and motors, which are connected to a plurality of respective water valves which respectively are the source of water which may contact the respective water detectors, the respective motors shutting off applicable water valves.

### Drawings

In drawings which illustrate specific embodiments of the invention, but which should not be construed as restricting the spirit or scope of the invention in any way:
Figure 1 illustrates an isometric view of a residential building equipped with various appliances and an automatic water shut-off system according to the invention.
Figure 2 illustrates an enlarged detailed isometric view of various household appliances equipped with moisture detectors, detection transmitters, detection receivers and automatic water shut-off, according to the invention.
Figure 3 illustrates a detailed isometric view of a detector, a transmitter, a receiver, a water shut-off valve and a valve shut-off motor.
Figure 4 illustrates an enlarged isometric view of a receiver module.
Figure 5 illustrates an enlarged view of a water shut-off valve and a valve shut-off motor.
Figure 6 illustrates an enlarged isometric view of a water detector and a transmitter.
Figure 7 illustrates a schematic front view of an electronic water detection system for a hotel or an apartment, with control panel, alarm and water detector tape.
Figure 8 illustrates a schematic front view of a water detection system for a residential building, including main alarm console, radio transmitter unit, water detector tape and motorized water shut-off valve.
Figure 9 illustrates a schematic view of a water detection receiver block diagram according to the invention.
Figure 10 illustrates an isometric view of an alternative embodiment of receiver with a motor and gear arrangement for shutting off a water valve.
Figure 11 illustrates a front schematic view of a high frequency receiver with gear control for automatic water shut-off.
Figure 12 illustrates a connector for a gear drive assembly.
Figure 13 illustrate an electronic circuit diagram of a receiver and motor activation circuit.
Figure 14 illustrates a circuit diagram of a five volt AC-DC floating control VC. actuator.
Figure 15 illustrates an alternative wiring diagram of a five volt AC-DC floating control.

### Detailed Description of the Preferred Embodiment

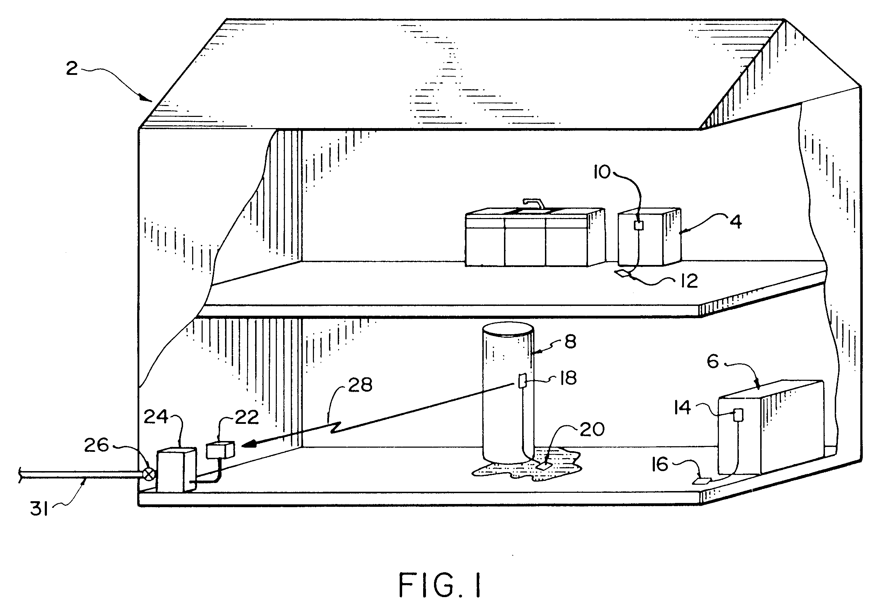

Referring to the drawings, Figure 1 illustrates an isometric view of a residential building equipped with various appliances and an automatic water shut-off system according to the invention. Specifically, Figure 1 illustrates in isometric view a two storey residential house 2, equipped with a dishwasher 4 on the second floor, and a clothes washer 6 and a hot water tank 8 on the first floor. Since each of these water consuming appliances is serviced by water, a break in the water line or a valve or a burst water seal, or some other defect or malfunction, in any one of the appliances can result in unwanted water damage, since the water being supplied to these appliances is under pressure, usually in the order of 40 to 60 psi.

The invention disclosed and claimed herein provides an automatic electronic means for automatically shutting off the main water supply to the house 2 in case a water leak is detected from any one of the appliances, and indeed from and any other source, if required. Specifically, the dishwasher 4 is equipped with a transmitter 10 and a water detector 12. Likewise, the clothes washer 6 is equipped with a transmitter 14 and a water detector 16. Similarly, the hot water tank 8 is equipped with a transmitter 18 and a water detector 20. If a water leak occurs at any of these three locations, then the respective detector 12, 16 or 20, which generally is positioned at floor level, will detect the leak and electronically activate the respective transmitter 10, transmitter 14 or transmitter 18. In turn, the respective transmitter, when activated, will transmit a high frequency radio signal to a receiver 22, which is adjusted to react to the high frequency radio signal and is normally located proximate to the main water line 31 and water valve 26, delivering water into the house 2.

It will be understood that the invention is also applicable to natural gas or propane appliances. The detectors will be gas detectors, which can be pre-set to detect threshold levels of the gas. Gas detectors can also be installed to detect threshold carbon monoxide levels.

As seen in Figure 1, and for illustration purposes, a water leak from hot water tank 8 is shown. The detector 20, which is electronically adapted to detect water by closing an electronic circuit, as will be explained below, electronically activates the transmitter 18. The transmitter 18 emits high frequency radio waves 28, as seen in Figure 1, which are directed to and received by the high frequency radio receiver 22. The receiver 22, which is electrically connected to an electric motor 24, electronically activates the motor 24, which in turn mechanically shuts off the water valve 26, as will be explained below. Thus, there is no more water leakage, and water damage due to unwanted water leakage is minimized.

The system can be expanded by installing a water detector in all areas of the house where water might leak, that is, anywhere where there is a water tap. Thus, there would be water detectors in bathrooms, kitchens, basements, etc. of the building. Each water detector, when contacted by leaking water, would emit an ultrasonic or radio frequency signal which, for a particular house, would all be at the same frequency. To avoid the possibility of interference with signals generated by an adjacent neighbour's house, the water detectors have adjustable custom set output frequencies.

The motor 24 is encased in a housing which includes a gear, motor and tap engaging tangs. The housing is securable to the valve 26 and the main water intake pipe 31. The housing does not need to be secured to adjacent structure of the house 2, and can easily be used in a concrete lined basement. The housing has adjustment securing means to accommodate water pipes of different diameters.

The motor 24 is regulated so that it will rotate a specified number of times in opening or closing the valve 26. There are several different ways of limiting the number of rotations that are applied to the valve to turn off the water valve 26. The motor 24 will normally be sold in the "closed position", so that when the installer installs it on the tap of the valve 26, also in the closed position, the motor 24 and electronics will be automatically "zeroed". The installer then unscrews the tap of the valve 26 to open it. The number of revolutions of the tap are then counted by the electronics of the apparatus, using one of several methods. A shaft encoder is suitable, but a simple mechanical limit switch on a slowly rotating gear is probably be simpler. No complex adjustment is required for the installer, so the invention can be installed by an average householder, or handyperson.

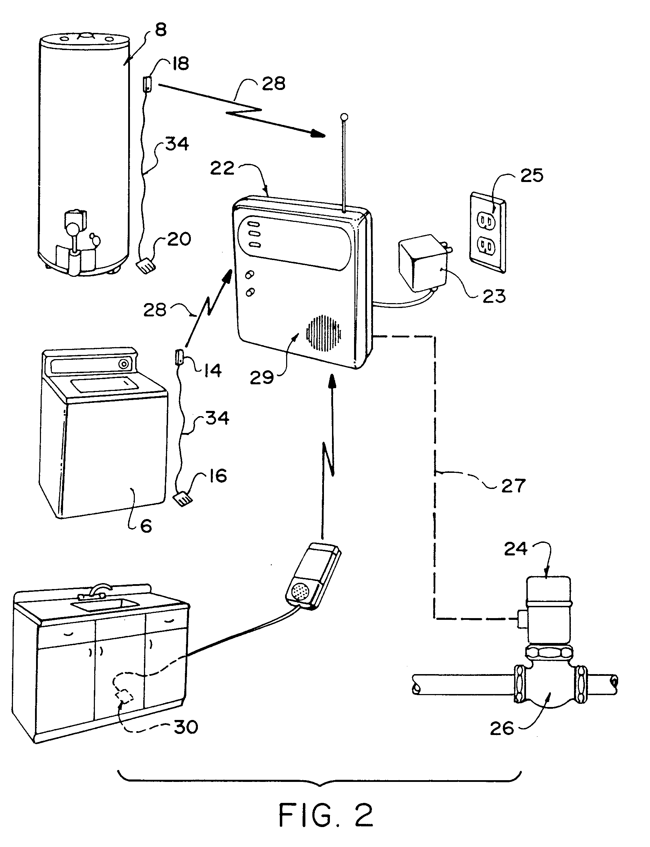

Figure 2 illustrates an enlarged detailed isometric view of various household appliances equipped with moisture detectors, detection transmitters, detection receivers and automatic water shut-off, according to the invention. Specifically, Figure 2 illustrates in isometric view, inter alia, a clothes washer 6, which is equipped with a transmitter 14 (shown magnified as well) and an external fluid detector 16, which is positioned at floor level. The transmitter 14 and detector 16 are connected by wire 34. Similarly, hot water tank 8 is equipped with a transmitter 18 connected by wire 34 to an external fluid detector 20, which is positioned at floor level. Figure 2 also shows a typical kitchen sink equipped with an internal water detector 30, positioned below the sink inside the cabinet. When a water leak occurs at any one of these points, the affected detector 20, 16 or 30, as the case may be, by being connected to the respective transmitter 14 or 18, by respective connector wires 34, emits a high frequency radio signal 28 (shown as a lightening bolt), which is received by water detection receiver and control 22, shown in enlarged isometric view. The receiver 22 illustrated in Figure 2 is equipped with a power switch, a low battery detection light (typically an LED light), a water-off light (LED), a reset (water-on) switch and a vacation switch, which is activated when the inhabitants of the house go on vacation. Optionally, the receiver 22 can include a loudspeaker 29, which transmits an audible alarm sound or electronic voice, which can be heard by the house residents. Typical batteries are lithium coin cell and Ni-Cd batteries. The transmitter 22 is powered by a low voltage transformer 23, which is typically plugged into a standard 110-120 volt AC outlet 25. Various standards associations, such as the Canadian Standards Association (CSA), because of potential electrocution problems, do not permit 110-120 volt alternating current to be used in environments where there might be water present. Accordingly, it is necessary to have a low voltage transformer 23, drawing 110-120 volt alternating current power from the outlet 25 and converting it to low voltage, such as 12 volts, for powering the transmitter 22. The transmitter 22 is connected by wiring 27 to an electrically activated motor 24 which, upon activation, shuts off water supply valve 26.

The transmitters 10, 14 or 18 can be adapted and manufactured to include an internal moisture detector, a daily supervisory transmission facility, and low battery supervisory transmission facility. Long life lithium batteries or Ni-Cd can be used in case of power failure. The transmitters include built in terminals for connection to external moisture detectors by connecting cable wire 34. The transmitters can also include circuitry and controls to enhance radio or high frequency audible range.

The receiver 22 is typically manufactured and adapted to operate on safe, low voltage, such as 6 to 12 volts. The receiver 22 can include electronic circuitry to monitor supervisory transmissions. It can include outputs to control the water valve 26 and trigger alarm systems. The receiver 22 can include power, low battery and water off indicators, reset and vacation pushbuttons, and a local alarm sounder. The entire system can be sold in kit form. The kit will include a control and receiver, a plug-in power transformer 23 with electrical cord, an electrically operated motor 24 and water valve 27 shut-off capability with connections, 30 feet connection wire 27, two moisture detection transmitters 14 and 18 with batteries, two external moisture detection detectors 16 and 20, and installation operation instructions.

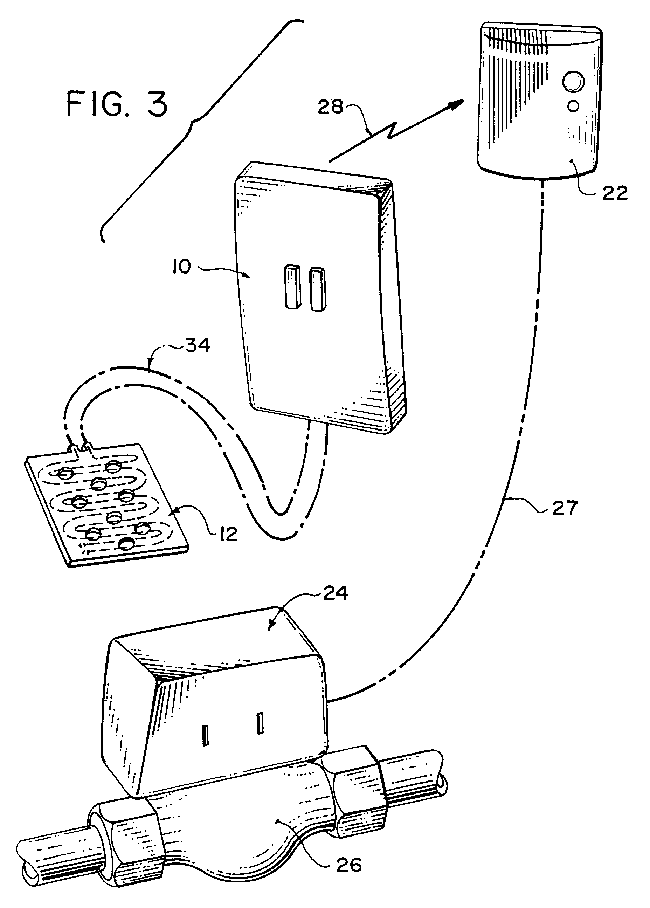

Figure 3 illustrates a detailed isometric view of a sensor 12, a transmitter 10, a receiver 22, a water shut-off valve 26 and a valve shut-off motor 24. As seen in Figure 3, the sensor 12 is electrically connected by wire 34 to the transmitter 10. The transmitter 10 can, if desired, be "hard wired" to the receiver 22, that is, connected by electrical wire (not shown). As shown in Figure 3, however, transmitter 10 is of the design which transmits a high frequency audio signal, or alternatively, a high frequency radio signal, to receiver 22. The receiver 22, when it receives an alarm signal from transmitter 10, transmits an electrical signal through wire 27 to electric motor 24, which, by rotating through a predetermined number of turns via a gear arrangement (not shown), will shut off main water valve 26.

It will be understood that the entire system can be adapted to sense gas leaks, such as natural gas, carbon monoxide, or propane leaks. The detectors 12 are then of a type which can sense the presence of methane, propane or carbon monoxide gas above predetermined levels. These are available in the marketplace. The valve 26, instead of being a water valve, will be a gas shut-off valve of a design approved by compressed gas authorities. Otherwise, other components are more or less the same as for the water shut-off system, but with different inserts.

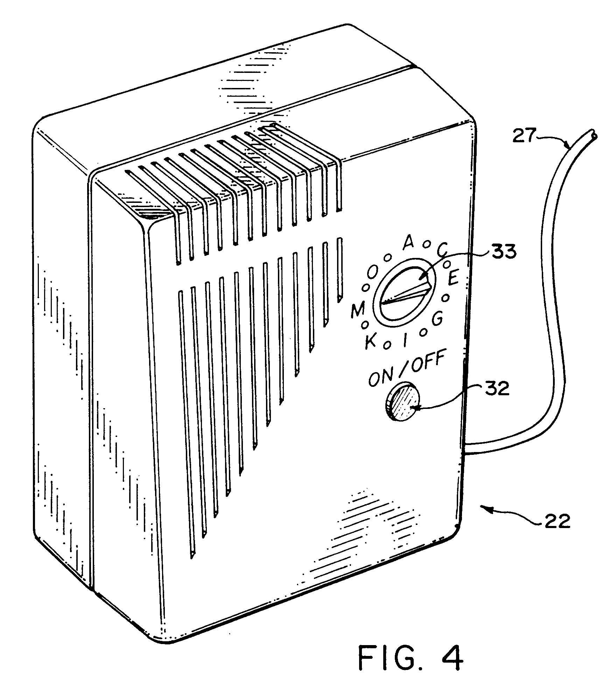

Figure 4 illustrates an enlarged isometric view of one design of receiver module 22. The receiver 22 illustrated in Figure 4 can include any number of optional operational features, supported by appropriate hardware and electronics. Specifically, the receiver 22 illustrated in Figure 4 includes an on-off power switch 32, and a manual dial 33 to enable the operator to adjust the sensitivity and frequency of the receiver 22. It will be understood that other dials and control systems can be used or included.

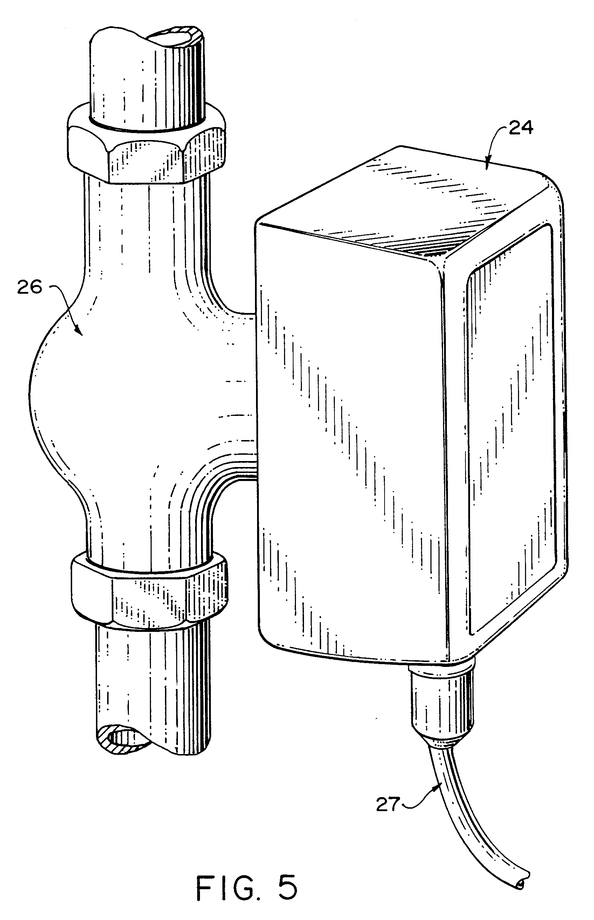

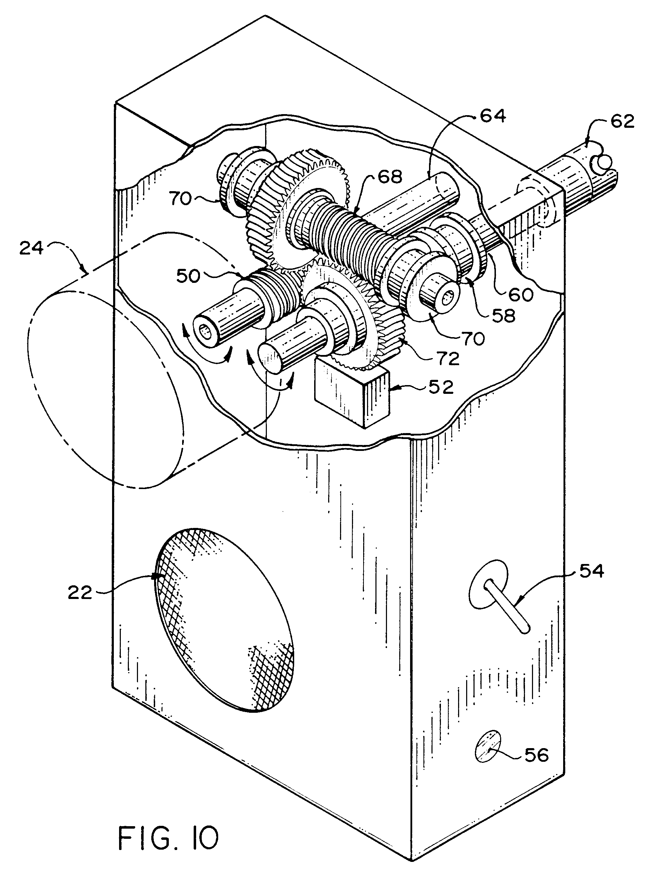

Figure 5 illustrates an enlarged isometric view of a typical water shut-off valve 26 and a valve shut-off motor 24. As seen in Figure 5, the electric motor 24 is connected directly to the main water shut-off valve 26 by a pipe which includes the valve shaft and tap (not shown but see Figure 10) . Alternatively, the valve 26 can be a gas shut-off valve for use with a natural gas or propane system. The meter 24 is housed in a protective casing 21.

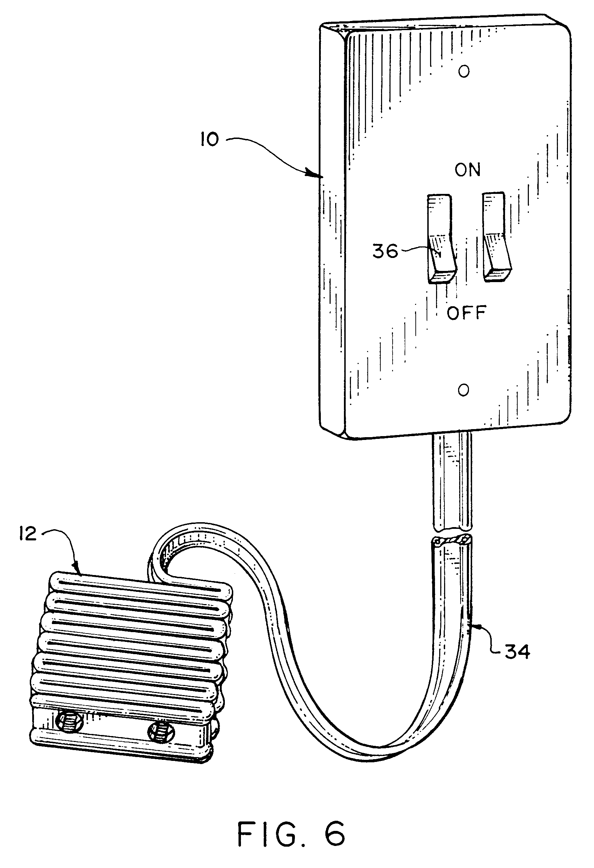

Figure 6 illustrates an enlarged isometric view of a water sensor 12 and a transmitter 10. Specifically, Figure 6 illustrates the transmitter 10 connected by a low voltage wire 34 to the water sensor 12. The water sensor 12 can be of a standard type available in the marketplace. For instance, Linear Electronics Inc. of Carlsbad, California, sells a water detector which, when activated by water, closes (shorts) an electronic circuit and commences to transmit an electronic signal to the transmitter 10. As seen in Figure 6, the transmitter 10 is equipped with an on-off switch 36 so that it can be manually turned off if desired.

It should be clearly understood that the subject invention is not restricted to water detection only. If desired, the system can be modified and expanded to include other forms of fluids such as oil, diesel, or gasoline leaks, and gas detectors, such as natural gas or propane, at appropriate locations, and in similar manner to that described for the water detection system, can be connected to transmitters which, by having different frequencies, would send transmission signals to appropriate receivers, which would then activate electrical motors which would shut off the main gas supply line (typically natural gas or propane) to the building. The two systems, fluid and gas, with separate respective detectors, can be used as combined systems to accommodate dwellings which are serviced by both water and gas. The system can also be adapted to mobile homes, trailers and recreation vehicles serviced by propane cylinders.

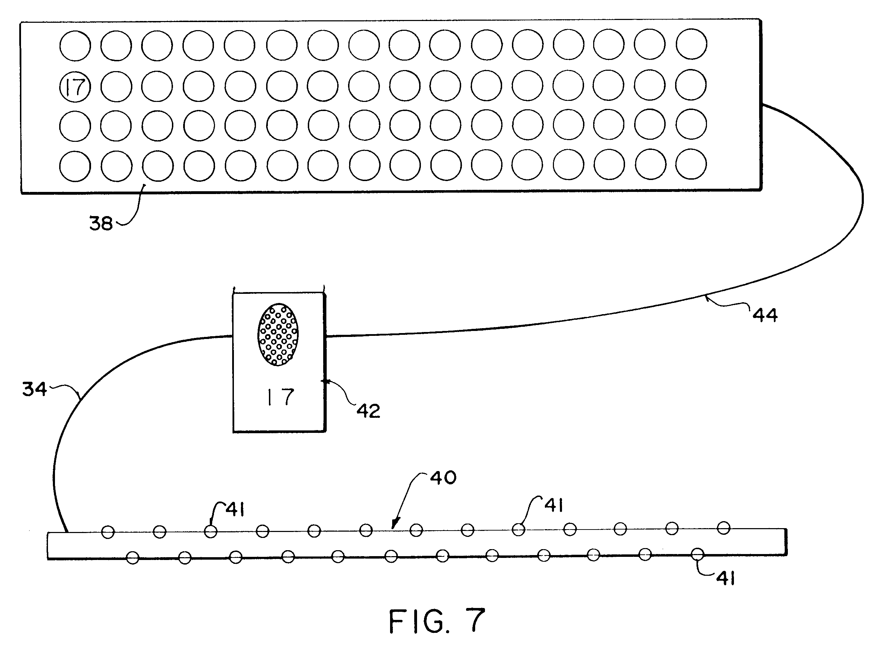

Figure 7 illustrates a schematic front view of a multiple electronic water detection system for a hotel or an apartment, with central control panel and alarm and tape strip. As seen in Figure 7, a main control panel 38 has display indicators for each room of the hotel or apartment building. According to the schematic diagram illustrated in Figure 7, only one water detector tape strip 40, deployed in one room of the building (typically the bathroom), and connected by an alarm 42 and hard wire 44 to the control panel 38, is shown. However, it will be recognized that there will be corresponding tape strips 40, alarms 42 and hard wire 44, connected to respective indicators on the main control panel 38, which typically is deployed in either the hotel manager's or the apartment manager's office, or in a convenient location in the central area of the building, such as the lobby, which is a controlled area.

As seen in Figure 7, the tape strip 40 is of a type which has a pair of electrical low voltage wires running in parallel and encased in a suitable plastic, such as polyvinylchloride (PVC). At periodic locations along each wire, there are openings 41 in the covering plastic. Normally, the tape strips 40 are dry. However, if there is a water leak, and water contacts one or more of the openings in the tape 40, an electrical short will occur which, in turn, will be detected by the electronics in the main control panel 38. An alarm 42 will then sound in the room. Furthermore, an indicator light will illuminate on the main control panel 38. The hotel manager or apartment manager can then quickly know that an unwanted and potentially serious water leak has occurred in one of the rooms in the building and take appropriate action. Running water taps, toilets, baths, sinks and the like, inadvertently or deliberately left by hotel guests and apartment dwellers, are a common problem in the hotel and apartment industries, cause considerable damage and raise insurance rates. The system disclosed herein will effectively deal with this problem.

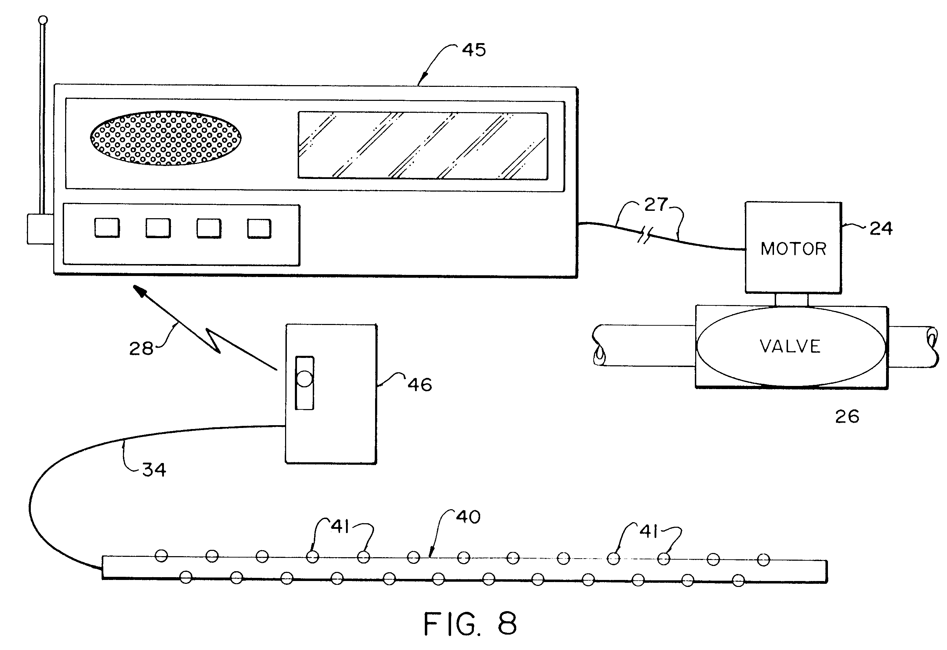

Figure 8 illustrates a schematic front view of a water detection system for a residential building, including main alarm console, radio transmitter unit, water strip tape and motorized water shut-off valve. The system illustrated schematically in Figure 8 is designed for installation in a residential building. The residential water detection system includes a main alarm console receiver 45, which can be similar to, or can be coordinated with, or built into a standard security alarm control panel. As with other receivers discussed previously, the main alarm console receiver 45 is similar in function to the receiver discussed previously and is hard wire connected by wire 27 to an electric motor 24, which in turn, when activated, can shut off main water valve 26, or a gas valve if applicable. In that case, the detectors are gas detectors.

Figure 8 illustrates the same type of water tape strips 40 as discussed previously in association with Figure 7, including a series of water detecting openings 41 in the tape 40. The tape 40 is connected by wire 34 to a radio transmitter unit 46, which can include an alarm light 48. The tape 40 is installed in each area where there may be a water leak. More than one tape 40 can be connected to one transmitter 46 if desired. The radio transmitter unit 46, when sensor tape 40 detects a water leak, transmits a high frequency radio signal to the main alarm console 45, which is connected by wire 27 to motor 24, thereby activating the main water valve 26 shut-off routine.

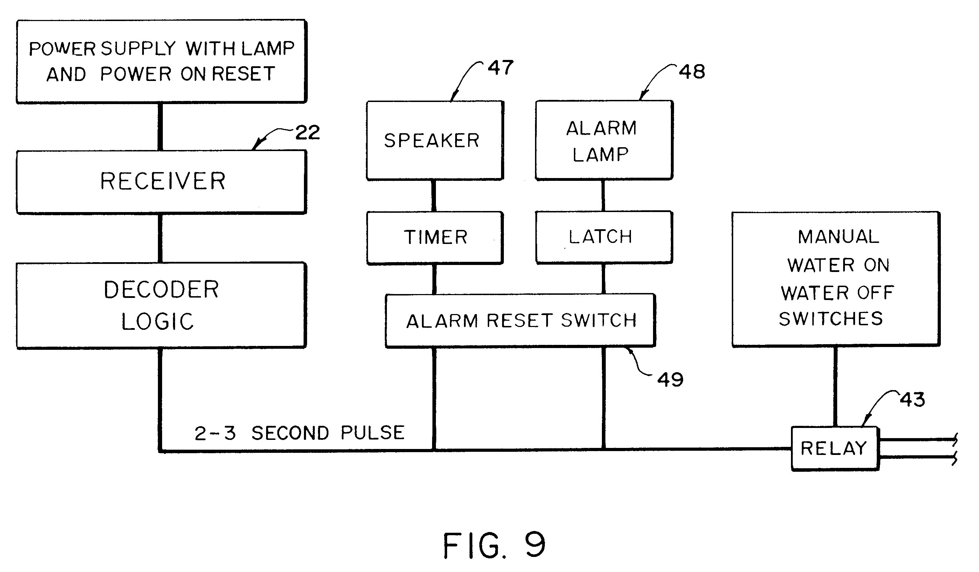

Figure 9 illustrates a schematic view of a water detection receiver block diagram according to the invention. The water detection receiver system illustrated in Figure 9 includes a circuit which resets on power up to avoid accidental triggering. The receiver decoder logic operates on a 2-3 second pulse. When the receiver 22 is triggered, an alarm will sound through speaker 47 for five minutes as determined by the five minute timer and the red lamp 48 will stay on. A relay 43 signals the motor 24 to shut off the valve 26 (not shown). The system includes a reset switch 49 which shuts off the alarm 47 and the red lamp 48. It is preferable to use an electric motor 24, rather than a solenoid, to shut off the valve. An advantage of this is that the motor 24 draws current only when it is operating, such as when it is closing the valve 26. A solenoid valve, on the other hand, usually draws current on a steady basis in order to stay in a closed position. Solenoids may be suitable for use with gas systems.

Figure 10 illustrates an isometric partial cut-away view of an alternative embodiment of receiver with a motor and gear arrangement for shutting off a water valve. The alternative embodiment illustrated in Figure 10 includes a motor 24, which is connected by gears to a shaft which can be connected to a valve (such as a main water or gas line valve) in order to shut off the valve. Specifically, as seen in Figure 10, the motor and gear arrangement includes a worm gear 50, which is driven by motor 24. A four turn maximum limit switch 52, or sensory control, which is resettable, limits the number of rotations of the motor 24 so the motor 24 does not overwind the tap and stem of the valve, and strip the threads on the gears. The gear arrangement includes a bushing 58, a spacer 60, a solid shaft 62, and a guide shaft 64. A reverse/forward toggle switch 54 and an indicator light 56 are included. When the motor 24 is activated by the receiver 22 receiving an alarm signal from the transmitter (not shown), the gear arrangement is driven and controlled by maximum turn limit switch 52. This permits the motor 24 to make a predetermined number of turns, and by being connected by shaft 62 to the water shut-off valve (not shown), turns the attachment of the valve a predetermined number of rotations in order to close the valve. The motor 24 can be reversed by throwing switch 54.

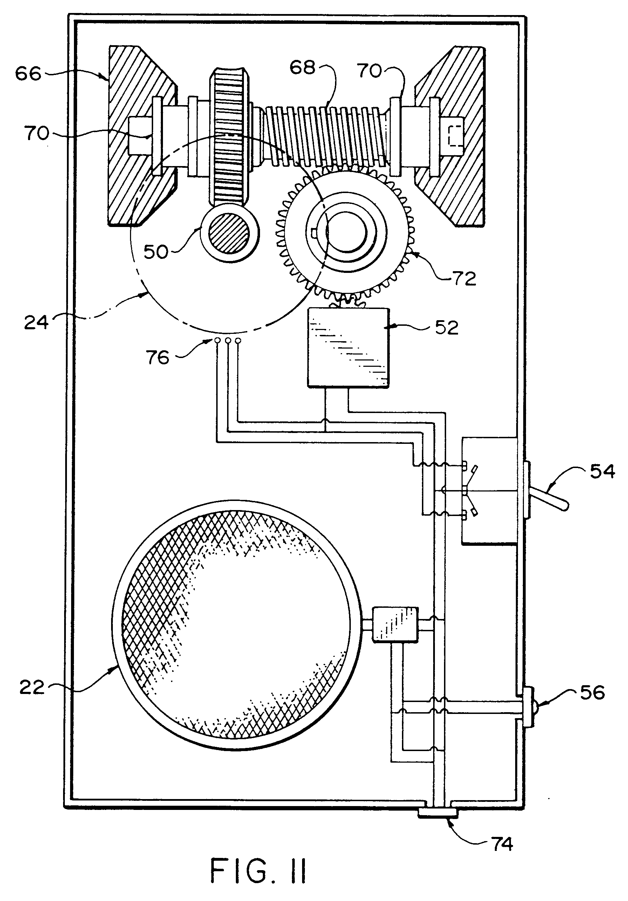

Figure 11 illustrates a front schematic partial section view of a high frequency receiver 22 with gear control for automatic water shut-off. Figure 11 illustrates from a different view point many of the same parts as illustrated and discussed previously in Figure 10. However, Figure 11 also shows a pair of stabilizing blocks 66, which hold the gear assembly in position. A gear exchanger 68, a collar 70, and a solid gear 72 which is connected to shut-off valve shaft 62, are also shown. A power supply 74, and an electrical motor connection 76 are also shown. The circuitry for the light 56, the reverse toggle switch 54 and the limit switch 52 are also shown.

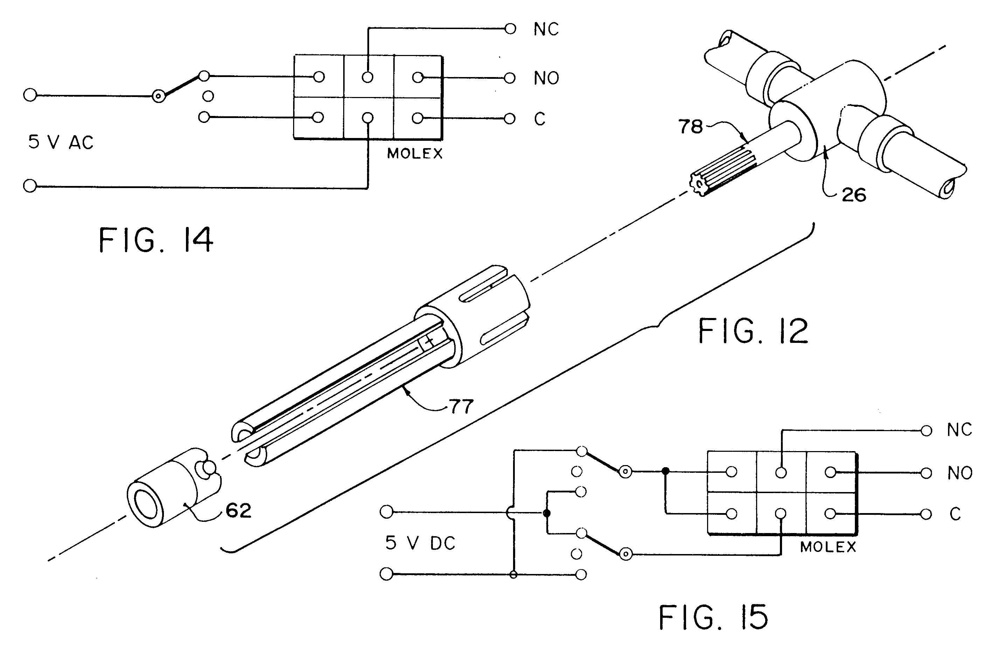

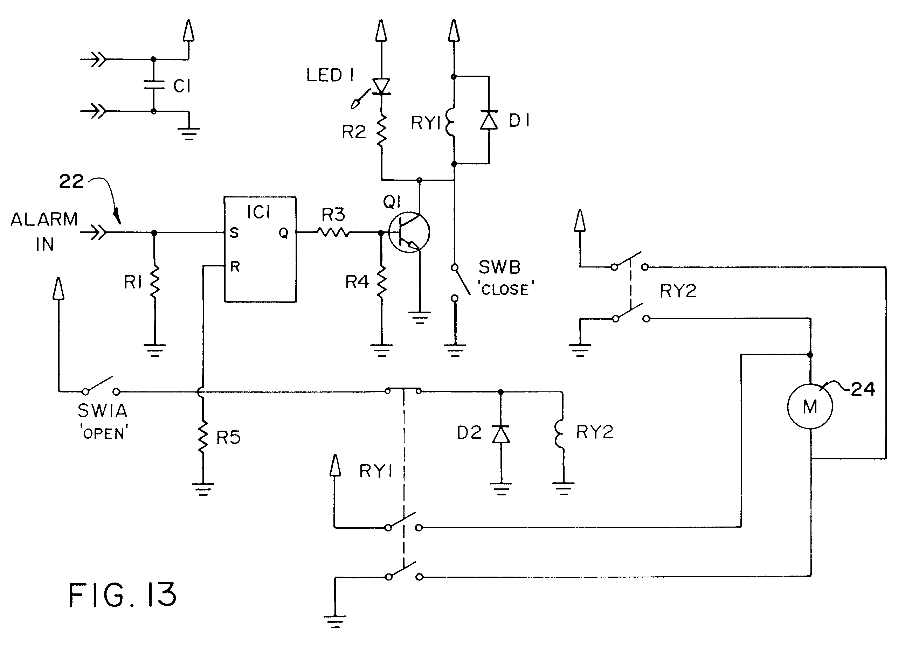

Figure 12 illustrates an isometric view of a connector for a gear drive assembly. Figure 12 illustrates one design of connector that can be used to connect the gear drive assembly illustrated in Figures 10 and 11 to an external main valve assembly 26. Specifically, as illustrated in Figure 12, the solid drive shaft 62 (see also Figures 10 and 11) can be connected by a connector 76 to a gear stem 78 of a water shut-off valve 26. Shaft 62, when rotated, rotates connector 76, which in turn rotates valve coupler shaft 78, which then either shuts off or opens valve 26, depending on the direction of rotation, and gear assembly required for valve activation.

Figure 13 illustrate an electronic circuit diagram of a receiver and motor activation circuit. The circuitry includes a number of resistors (R), switches (SW), diodes (D), coils (RY), capacitors (C) and light emitting diodes (LED). The alarm is received at "alarm in" (receiver 22) and the circuit then closes to activate motor 24. The activator switch operates between the three vertical contact points. The circuit can be mounted on a standard silicone chip, which can be easily installed or replaced. Figure 14 illustrates a circuit diagram of a five volt AC to DC floating control VC actuator. These circuits provide greater control by giving in between settings rather than straight on-off settings. Figure 15 illustrates an alternative wiring diagram of a five volt AC to DC floating control. The actuator will function in a regular 2-position (on/off) mode if the controller does not have an off-centre capability.

As will be apparent to those skilled in the art in the light of the foregoing disclosure, many alterations and modifications are possible in the practice of this invention without departing from the spirit or scope thereof. Accordingly, the scope of the invention is to be construed in accordance with the substance defined by the following claims.

## Claims

1. A liquid or gas leak detection and control apparatus comprising:
(a) a liquid or gas detector for detecting liquid or gas;
(b) a transmitter associated with the liquid or gas detector; said transmitter, when activated by the liquid or gas detector detecting liquid or gas, transmitting audio, radio or electrical signals;
(c) a receiver and control for receiving and acting on audio, radio or electronic signals transmitted by the transmitter;
(d) a mechanism associated with the receiver and control, the mechanism, when commanded by the receiver and control, being activated to shut off a valve which controls a source of the liquid or gas; and
(e) a power supply for electrically powering the detector, transmitter, receiver and mechanism.

2. An apparatus as claimed in claim 1 wherein the detector is an electrical water detector, which generates an electrical signal to the transmitter when water contacts the detector.

3. An apparatus as claimed in claim 2 wherein the transmitter is electrically connected to the water detector and when water contacts by the water detector, is electrically activated and transmits a high frequency radio signal to the receiver.

4. An apparatus as claimed in claim 3 wherein the mechanism is an electric motor and the receiver, which receives a radio signal from the transmitter, electrically activates the electric motor which is connected to and shuts off a water valve which controls the source of the water.

5. An apparatus as claimed in claim 4 wherein the receiver is electrically powered by low voltage electrical current.

6. An apparatus as claimed in claim 5 wherein the low voltage electrical current is provided by a low voltage transformer which is connected to a source of high voltage alternating electrical current.

7. An apparatus as claimed in claim 6 wherein the receiver is connected to the electric motor by a wire.

8. An apparatus as claimed in claim 4 wherein the motor includes a mechanism which limits the number of rotations of the motor, when activated by the receiver.

9. An apparatus as claimed in claim 1 wherein the transmitter is connected by wiring to the receiver.

10. An apparatus as claimed in claim 1 wherein the detector is an electrical gas detector, which generates an electrical signal to the transmitter when a specified gas contacts the detector.

11. An apparatus as claimed in claim 10 wherein the gas detector is activated by natural gas above a predetermined threshold level.

12. An apparatus as claimed in claim 11 wherein the mechanism is an electric motor and the receiver, when receiving a signal from the natural gas detector activated transmitter, delivers an electrical signal to the motor, which is connected to and shuts off a valve which controls the source of the detected natural gas.

13. An apparatus as claimed in claim 1 wherein the detector is a propane gas detector.

14. An apparatus as claimed in claim 1 wherein the detector is a water detector and comprises an electrical wire, enclosed in electrical insulation, with one or more ports in the insulation which enable water to penetrate the insulation and contact the electrical wire.

15. An apparatus as claimed in claim 14 including a second electrical wire enclosed in the insulation, with one or more ports in the insulation, which enable water to penetrate the electrical insulation and contact the electrical wire.

16. An apparatus as claimed in claim 4 wherein the motor is a rotary electrical motor which is connected to the water valve by a series of gears and shafts which translate motor rotational force to valve closing or opening rotational force.

17. An apparatus as claimed in claim 16 including a maximum motor rotation limiting switch.

18. An apparatus as claimed in claim 16 wherein the transmitter transmits radio signals of a specified frequency, and the receiver receives and is activated by radio signals of the same specified frequency.

19. An apparatus as claimed in claim 2 including at least one water detector, at least one transmitter associated with the detector, at least one receiver associated with the water detector transmitter, at least one mechanism which is an electrically activated motor connected to a water shut-off valve, at least one gas detector, at least transmitter associated with the gas detector, at least one receiver associated with the gas detector transmitter and at least one mechanism which is an electrical motor connected to a valve controlling a gas source.

20. An apparatus as claimed in claim 1 including a plurality of water detectors deployed throughout a building, and a plurality of connecting transmitters deployed throughout the building, the transmitters communicating with respective receivers and motors, which are connected to a plurality of respective water valves which respectively are the source of water which may contact the respective water detectors, the respective motors shutting off applicable water valves.
